Europäisches Patentamt

European Patent Office

Office européen des brevets

(11) Veröffentlichungsnummer : **0 023 550**
**B1**

(12) **EUROPÄISCHE PATENTSCHRIFT**

(45) Veröffentlichungstag der Patentschrift :
05.10.83

(21) Anmeldenummer : 80103293.9

(22) Anmeldetag : 12.06.80

(51) Int. Cl.³ : **B 01 D 53/34**

(54) Verfahren zum selektiven Auswaschen von Schwefelverbindungen aus feuchten Gasgemischen.

(30) Priorität : 15.06.79 DE 2924162

(43) Veröffentlichungstag der Anmeldung :
11.02.81 Patentblatt 81/06

(45) Bekanntmachung des Hinweises auf die Patenterteilung : 05.10.83 Patentblatt 83/40

(84) Benannte Vertragsstaaten :
AT BE DE FR GB IT NL

(56) Entgegenhaltungen :
DE A 1 942 639
DE C 1 231 222
US A 2 863 527

(73) Patentinhaber : Linde Aktiengesellschaft
Abraham-Lincoln-Strasse 21
D-6200 Wiesbaden (DE)

(72) Erfinder : Ranke, Gerhard
Feichtetstrasse 6
D-8134 Pöcking (DE)
Erfinder : Siegert, Friedrich
Winlbaldstrasse 14
D-8190 Wolfratshausen (DE)

(74) Vertreter : Schaefer, Gerhard, Dr.
Linde Aktiengesellschaft Zentrale Patentabteilung
D-8023 Höllriegelskreuth (DE)

Verfahren zum selektiven Auswaschen von Schwefelverbindungen aus feuchten Gasgemischen

Die Erfindung betrifft ein Verfahren zum selektiven Auswaschen von Schwefelverbindungen, insbesondere Schwefelwasserstoff und Kohlenoxidsulfid, aus feuchten Gasgemischen durch Wäsche mit Aromaten mit einem Methanolzusatz als Waschflüssigkeit bei Temperaturen unter 0 °C, wobei das feuchte Gasgemisch vor Abkühlung auf die Waschtemperatur mit flüssigem Methanol in Berührung gebracht und die Waschflüssigkeit nach Aufnahme der Schwefelverbindungen einer Warmregenerierung unterzogen sowie anschließend in die Wäsche zurückgeführt wird.

In der DE-PS 1 231 222 ist ein Verfahren zur Herstellung von Ammoniak-Synthese-Gas beschrieben. Dabei wird zunächst durch Vergasung fester oder flüssiger Brennstoffe mit Sauerstoff und Wasserdampf ein Rohgas hergestellt, das nach Entfernung der Schwefelverbindungen einer katalytischen Konvertierung des Kohlenmonoxids zu Kohlendioxid zugeführt und anschließend einer Wäsche zur Entfernung des Kohlendioxids unterzogen wird. Die Entfernung der Schwefelverbindungen, insbesondere des Schwefelwasserstoffs sowie des Kohlenoxidsulfids, erfolgt durch Tieftemperaturwäsche mit Xylol, ebenso wie die Kohlendioxid-Entfernung. Das im ersten der beiden genannten Waschprozesse mit Schwefelverbindungen beladene Xylol wird nach Erwärmung in eine Regenerierkolonne, die am Sumpf durch Heißdampf auf ca. 165 °C geheizt wird, eingeführt und dort von den absorbierten Schwefelverbindungen befreit. Da das Rohgas einen gewissen Anteil an Wasserdampf mitführt, wird in dieses vor der Abkühlung auf die Waschtemperatur zum Zwecke der Verhinderung der Eisbildung Methanol eingeführt. Das so mit Wasserdampf beladene Methanol wird aus dem der Abkühlung des Rohgases auf die Waschtemperatur dienenden Wärmeaustauscher abgezogen und in eine Methanol-Wasser-Trennsäule eingeführt. Das regenerierte Methanol wird auf den genannten Wärmeaustauscher zurückgegeben. In dem abgekühlten Rohgas, das der Xylolwäsche zugeführt werden soll, ist noch ein gewisser Anteil an wasserhaltigem Methanol enthalten. Dieses gelangt zusammen mit dem während des Waschprozesses mit Schwefelverbindungen beladenen Xylol in die Regenerierkolonne. Die sich im Sumpf der Regenerierkolonne ansammelnde, vorwiegend aus Xylol und geringen Anteilen des Methanol-Wasser-Gemisches bestehende Sumpfflüssigkeit muß auf ca. 165 °C erhitzt werden, um die Schwefelverbindungen in dem gewünschten Ausmaße auszutreiben.

Beim bekannten Verfahren wird angestrebt, den Methanolgehalt des Xylols auf etwa 2 Gew.% zu halten. Deshalb wird ein Teil des vom Sumpf der Regenerierkolonne abgezogenen, bezüglich der Schwefelverbindungen regenerierten Xylols zum Zwecke der Methanolabtrennung einer Destillierkolonne zugeführt, während der andere Teil des regenerierten Xylols auf die Waschsäule zurückgegeben wird. In der Destillierkolonne, die am Sumpf mit Heißdampf auf ca. 150 °C geheizt wird, findet die Trennung in eine flüssige Xylolphase und eine dampfförmige Methanol-Wasser-Phase statt, die über Kopf abgezogen wird. Dieses Methanol-Wasser-Gemisch wird anschließend ebenfalls in die bereits erwähnte Methanol-Wasser-Trennsäule eingeführt.

Im Hinblick auf eine möglichst weitgehende Reduzierung der Anlagenkosten sowie vom Gesichtspunkt einer möglichst ökonomischen Verfahrensführung her erweist sich das bekannte Verfahren noch als verbesserungsbedürftig. So weist der der Rohgasreinigung dienende Anlagenteil eine relativ hohe Anzahl an Trennsäulen auf, deren Betrieb jeweils einen gewissen Energieaufwand erfordert. Insbesondere wird eine vergleichsweise große Menge an Hochdruckdampf benötigt, um die absorbierten Komponenten aus dem Waschmittel auszutreiben und den Methanolgehalt des Waschmittels niedrig zu halten.

Aus der Beschreibung zum Stand der Technik der DE-OS 19 42 639 ist es bekannt, daß Gase, insbesondere von Schwefelverbindungen und Kohlendioxid dadurch befreit werden können, daß sie unter Druck bei Temperaturen unterhalb 0 °C mit einem oder mehreren organischen Waschmitteln, z. B. Methanol, behandelt werden. Wie jedoch die diesem Stand der Technik zugrundeliegende DE-PS 12 22 198 lehrt, sind unter mehreren Waschmitteln lediglich verschiedene Methanol-Wasser-Gemische zu verstehen.

Der Erfindung liegt daher die Aufgabe zugrunde, ein Verfahren der eingangs genannten Art bereitzustellen, das hinsichtlich der Anlagekosten und des für den Betrieb erforderlichen Energieaufwandes möglichst kostengünstig ist.

Diese Aufgabe wird gemäß der Erfindung dadurch gelöst, daß als Waschmittel Toluol oder wie bekannt Xylol verwendet wird und daß in der von der Warmregenerierung zur Wäsche zurückzuführenden Waschflüssigkeit eine Methanolkonzentration von 3 bis 30 Gew.% aufrechterhalten wird.

Es hat sich nämlich gezeigt, daß im Gegensatz zu der gemäß dem bekannten Verfahren einzuhaltenden Betriebsweise eine weit höhere Methanolkonzentration in der Waschflüssigkeit hinsichtlich der Kostengestaltung entscheidende Vorteile mit sich bringt. Diese liegen einmal in der vollen Ausnutzung des Selektivitätsbereiches des Toluol oder Xylol-Methanol-Gemisches gegenüber den auszuwaschenden Schwefel verbindungen, insbesondere dem Schwefelwasserstoff, zum anderen in einer Verminderung des Heizdampfbedarfes zum Zwecke der Regenerierung aufgrund einer erheblichen Senkung der Sumpftemperatur, in einer wesentlichen Reduzierung der Heizfläche des Waschmittelgegenstromwärmeaustauschers, sowie nicht zuletzt in dem Wegfall der Destillierkolonne, die beim bekannten Verfahren zur Aufrechterhaltung einer maximalen Methanolkonzentration von 2 Gew.% in der Waschflüssigkeit benötigt wird.

Es ist bekannt, daß die Aromaten Xylol und Toluol Schwefelwasserstoff bei Temperaturen unterhalb von 0 °C im Vergleich zum Kohlendioxid selektiv absorbieren. Diese Selektivität erstreckt sich beim Xylol bekanntermaßen auch auf das Kohlenoxidsulfid sowie andere Schwefelverbindungen (DE-PS 1 231 222). Wie jetzt gefunden wurde, ist die zuletzt genannte Eigenschaft auch beim Toluol anzutreffen.

Wie entsprechende Messungen ergeben haben, ändern sich die Kohlendioxid- und Schwefelverbindungs-Löslichkeiten in Toluol und Xylol mit steigendem Methanolgehalt zunächst nicht, um dann bis zur Löslichkeit von reinem Methanol anzusteigen. Da der Anstieg der Kohlendioxid-Löslichkeit wesentlich größer ist als der der Schwefelverbindungs-Löslichkeit, ist mit diesem Anstieg ein Abfall in der selektiven Auswaschung der Schwefelverbindungen gegenüber dem Kohlendioxid verbunden. Wird nun mit Toluol oder Xylol als Waschflüssigkeit, die anstatt nur bis zu 2 Gew.% nunmehr 3 bis 30 Gew.% Methanol enthält, gearbeitet, so hat dies nur im Bereich von etwa 20 bis 30 Gew.% eine ganz geringfügige, sonst aber keine Verminderung der Selektivität bezüglich der Absorption von Schwefelverbindungen zur Folge. Bevorzugt wird ohnehin eine Methanol Konzentration von 3 bis 20 Gew.-% oder 3 bis 8 Gew.%. Dafür ergibt sich jedoch der Vorteil, daß im Sumpf der Regeneriersäule bei erheblich niedrigeren Temperaturen gearbeitet werden kann, als dies bei der Anwendung von Rein-Toluol oder Xylol oder nur sehr geringer Methanolzusätze der Fall ist. So beträgt bei einem gebräuchlichen Druck die im Sumpf der Regeneriersäule erforderliche Temperatur bei Anwendung einer aus 8 Gew.% Methanol enthaltendem Toluol bestehenden Waschflüssigkeit nur mehr ca. 111 °C gegenüber etwa 166 °C bei reinem Toluol. Der Heizbedarf der Regeneriersäule kann daher mit Niederdruckdampf gedeckt werden. Die Regenerierwirkung wird durch diese Temperatursenkung nicht beeinträchtigt, da die Rolle des Strippdampfes nunmehr weitgehend vom Methanol übernommen wird, das bei weit geringeren Temperaturen in die Dampfphase übergeht als das Toluol. Eine Destilliersäule zum Zwecke der Begrenzung der Methanolkonzentration ist beim erfindungsgemäßen Verfahren nicht mehr erforderlich, wie auch aus dem weiter unten angeführten Ausführungsbeispiel deutlich wird.

Die unteren Grenzen der Konzentrationsbereiche ergeben sich aus der im Sumpf der Regeneriersäule angestrebten Temperatursenkung.

Als zu verarbeitende Gasgemische kommen die verschiedensten Schwefelverbindungen, insbesondere Schwefelwasserstoff und Kohlenoxidsulfid, enthaltenden Rohgase in Frage, wie z. B. Syntheserohgase zur Methanol- oder Ammoniaksynthese, die nach der Entschwefelung einer katalytischen Konvertierung des Kohlenmonoxids zugeführt werden, oder aus der partiellen Oxidation von festen oder flüssigen kohlenstoffhaltigen Brennstoffen hervorgehende Rohgase, die anschließend zur Stromerzeugung in Gasturbinen eingesetzt werden und bei denen aus Gründen optimaler Mengenausnutzung keine anschließende Kohlendioxidentfernung vorgesehen ist.

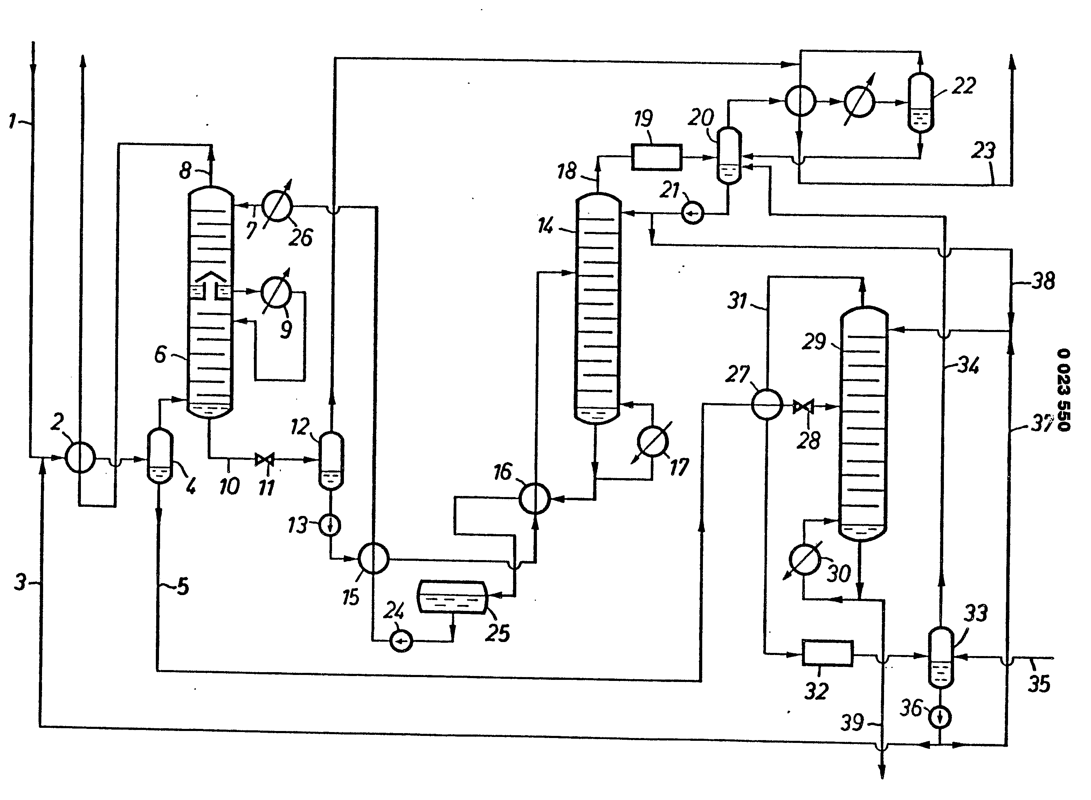

Anschließend soll ein Ausführungsbeispiel der Erfindung im Zusammenhang mit der Abbildung, die den Verfahrensablauf in schematischer Weise wiedergibt, näher erläutert werden.

Durch eine Leitung 1 wird ein zu 35 Mol-% aus Wasserstoff, zu 43 Mol-% aus Kohlenmonoxid, zu 20 Mol-% aus Kohlendioxid, zu 0,97 Mol-% aus Schwefelwasserstoff, zu 0,06 Mol-% aus Kohlenoxidsulfid und im übrigen aus Stickstoff, Argon und Methan bestehendes Rohgas herangeführt. Die Gesamtmenge des Rohgases beträgt 80 000 Nm³/h, die Gastemperatur 38 °C, der Gasdruck 36 bar. Vor Einführung in einen Wärmeaustauscher 2, in dem das Rohgas auf etwa −10 °C abgekühlt wird, wird in dieses flüssiges Methanol eingegeben, um die aufgrund des im Rohgas enthaltenen Wasserdampfes zu befürchtende Eisbildung während der Abkühlung auf die Waschtemperatur zu verhindern. Dieses Methanol wird durch eine Leitung 3 herangeführt. Nach Absorption des größten Teiles des im Rohgas enthaltenen Wasserdampfes wird das nunmehr wasserhaltige Methanol aus dem dem Wärmeaustauscher 2 nachgeschalteten Abscheider 4 abgezogen und durch eine Leitung 5 der Methanol-Wasser-Trennung zugeführt. Das so zum größten Teil vom Wasserdampf befreite, jedoch noch einen gewissen Anteil wasserhaltigen Methanoldampfes enthaltende Rohgas wird nunmehr in den unteren Teil einer Waschsäule 6 eingeführt. Auf den oberen Teil dieser Säule wird durch eine Leitung 7 eine auf − 33 °C abgekühlte Waschflüssigkeit aufgegeben, die zu 92 Gew-% aus Toluol und zu 8 Gew-% aus Methanol besteht. Diese Waschflüssigkeit nimmt während des im Inneren der Säule stattfindenden Gas-Flüssigkeits-Kontaktes die im Rohgas enthaltenen Schwefelverbindungen nahezu vollständig auf. Das vom Kopf der Säule durch eine Leitung 8 abströmende Produktgas enthält nurmehr höchstens 160 vppm Schwefelwasserstoff und Kohlenoxidsulfid. Im übrigen besteht das Produktgas zu 37 Mol-% aus Wasserstoff, zu 45 Mol-% aus Kohlenmonoxid, zu 17 Mol-% aus Kohlendioxid und ca. zu 1 Mol-% aus Stickstoff, Argon und Methan. Die über Leitung 8 abgezogene Gasmenge beträgt 75 470 Nm³/h. Das Produktgas hat nach der Anwärmung im Wärmeaustauscher 2 eine Temperatur von 28 °C und fällt bei einem Druck von etwa 34 bar an.

Das im oberen Teil der Waschsäule 6 herabrieselnde, methanolhaltige Toluol erwärmt sich infolge der bei der Aufnahme der Schwefelverbindungen freiwerdenden Absorptionswärme, die teilweise in einem Kühler 9 abgeführt wird. Die insgesamt auf den Kopf der Wachsäule 6 aufgegebene Waschflüssigkeitsmenge beträgt 82 t/h. Die durch eine Leitung 10 vom Sumpf der Waschsäule abfließende, nunmehr die Schwefelverbindungen und einen gewissen Anteil an Kohlendioxid enthaltende Waschflüssigkeit wird in einem Drosselventil 11 auf ca. 4 bar zwischenentspannt. Dabei sinkt die Temperatur der beladenen Waschflüssigkeit von − 18 auf − 24 °C. In einem Abscheider 12 wird die bei der Entspannung freiwerdende gasförmige Fraktion, die vorwiegend aus in der Waschsäule mitaufgenommenem Kohlenmonoxid und Wasserstoff besteht, von der Waschflüssigkeit abgetrennt, die anschließend mittels einer Pumpe 13 auf den oberen Teil einer Regeneriersäule 14 gefördert wird. Vorher durchströmt die beladene Waschflüssigkeit zwei Wärmeaustauscher 15 und 16, in denen sie im Gegenstrom zu regenerierter warmer Waschflüssigkeit zunächst auf 25 und dann auf 86 °C erhitzt wird. Die Regeneriersäule 14 wird am Sumpf erhitzt, und zwar mittels einen Wärmeaustauscher 17 durchströmenden Heizdampfes. Die durch diese Heizung aus der Sumpfflüssigkeit der Regeneriersäule freigesetzte Dampfphase besteht zum größten Teil aus Methanol. Diese Dampfphase steigt innerhalb der Regeneriersäule auf und nimmt im Gegenstrom zur herabrieselnden beladenen Waschflüssigkeit aus dieser die gelösten Schwefelverbindungen, mitgelöstes Kohlendioxid und noch in der Waschflüssigkeit enthaltene tiefersiedende Komponenten auf. Die über Leitung 18 vom Kopf der Regeneriersäule 14 abströmende Gasfraktion enthält auch noch Methanol und Wasserdampf, die nach Abkühlung auf ca. 59 °C in einem Kühler 19 als Kondensat aus einem nachgeschalteten Abscheider 20 abgezogen und mittels einer Pumpe 21 als Rücklaufflüssigkeit auf den Kopf der Regeneriersäule zurückgefördert werden. Die in der aus dem Abscheider 20 abgezogenen Gasfraktion noch enthaltenen Methanol- und Wasserdampfanteile werden nach weiterer Abkühlung dieser Fraktion auf insgesamt ca. − 33 °C in einem weiteren Abscheider 22 als Kondensat zurückgewonnen und schließlich ebenfalls auf den Kopf der Regeneriersäule 14 zurückgegeben. Die im Abscheider 22 freigesetzte Gasfraktion wird mit der im Abscheider 12 freigesetzten Gasfraktion vereinigt, so daß durch Leitung 23 eine sogenannte Schwefelwasserstoff-Fraktion abgeführt werden kann, die zu 17 Mol-% aus Schwefelwasserstoff, zu 1 Mol-% aus Kohlenoxidsulfid, zu 73 Mol-% aus Kohlendioxid und im übrigen aus den tiefersiedenden Komponenten, Kohlenmonoxid, Wasserstoff, Stickstoff, Argon und Methan besteht. Diese Schwefelwasserstoff-Fraktion fällt in einer Menge von 4 530 Nm³/h bei einer Temperatur von 30 °C und unter einem Druck von 2,75 bar an. Die vom Sumpf der Regeneriersäule 14 mit einer Temperatur von 111 °C abgezogene, bezüglich der Schwefelverbindungen vollständig regenerierte Waschflüssigkeit wird in den Wärmeaustauschern 16 und 15 im Gegenstrom zu kalter beladener Waschflüssigkeit auf 30 bzw. − 17 °C abgekühlt und nach Zwischenspeicherung in einem Speiderbehälter 25 mittels der Pumpe 24, die auch der Rückverdichtung auf den Druck der Waschsäule 6 dient, auf den Kopf derselben zurückgefördert. Die letzte Abkühlung der regenerierten Waschflüssigkeit auf die Waschtemperatur von ca. − 33 °C findet in einem Kühler 26 statt.

Die im Abscheider 4 vom Rohgas abgetrennt, aus wasserhaltigem Methanol bestehende flüssige Fraktion gelangt über Leitung 5, Wärmeaustauscher 27 sowie Drosselventil 28 in eine Methanol-Wasser-Trennsäule 29. Diese Trennsäule arbeitet bei einem Druck von ca. 4 bar. Die über einem mit Heizdampf betriebenen Erhitzer 30 erzeugte Sumpftemperatur der Trennsäule beträgt ca. 146 °C. Vom Kopf der Trennsäule wird über eine Leitung 31 nahezu wasserfreies Methanol abgezogen, in den Wärmeaustauschern 27 und 32 auf ca. 60 °C abgekühlt und dadurch kondensiert. Ein geringer Anteil tiefersiedender Komponenten wird in einem Abscheider 33 freigesetzt, über eine Leitung 34 abgeführt und im Abscheider 20 mit dem gasförmigen Kopfprodukt der Regeneriersäule 14 vereinigt. In den Abscheider 33 werden bei Bedarf die zum Ausgleich von Methanolverlusten benötigten geringen Methanolmengen über 35 eingeführt. Das regenerierte Methanol wird mittels einer Pumpe 36 aus dem Abscheider 33 abgezogen und durch Leitung 3 in die Rohgasleitung 1 zurückgeführt. Rücklaufflüssigkeit für die Methanol-Wasser-Trennsäule wird über Leitungen 37 und 38 herangeführt. Das im Sumpf der Methanol-Wasser-Trennsäule sich ansammelnde Wasser wird durch eine Leitung 39 abgezogen.

### Ansprüche

1. Verfahren zum selektiven Auswaschen von Schwefelverbindungen, insbesondere Schwefelwasserstoff und Kohlenoxidsulfid, aus feuchten Gasgemischen durch Wäsche mit Aromaten mit einem Methanolzusatz als Waschflüssigkeit bei Temperaturen unter 0 °C, wobei das feuchte Gasgemisch vor Abkühlung auf die Waschtemperatur mit flüssigem Methanol in Berührung gebracht und die Waschflüssigkeit nach Aufnahme der Schwefelverbindungen einer Warmregenerierung unterzogen sowie anschließend in die Wäsche zurückgeführt wird, dadurch gekennzeichnet, daß als Waschflüssigkeit Toluol oder wie bekannt Xylol verwendet wird und daß in der von der Warmregenerierung zur Wäsche zurückzuführenden Waschflüssigkeit eine Methanolkonzentration von 3 bis 30 Gew.% aufrechterhalten wird.

2. Verfahren nach Anspruch 1, dadurch gekennzeichnet, daß eine Methanolkonzentration von 3 bis 20 Gew.% aufrechterhalten wird.

3. Verfahren nach Anspruch 1, dadurch gekennzeichnet, daß eine Methanolkonzentration von 3 bis 8 Gew.% aufrechterhalten wird.

## Claims

1. A process for the selective scrubbing of sulphur compounds, in particular hydrogen sulphide and carbon oxysulphide, from moist gas mixtures by washing with aromatic compounds to which methanol has been added as washing liquid, at temperatures below 0 °C, where prior to cooling to the washing temperature, the moist gas mixture is brought into contact with liquid methanol and after the absorption of the sulphur compounds, the washing liquid is subjected to a hot regeneration and subsequently returned to the washing step, characterised in that toluene or, as is known, xylene is used as the washing liquid, and that a methanol concentration of 3 to 30 % by weight is maintained in the washing liquid which is to be returned from the hot regeneration to the washing step.

2. A process as claimed in Claim 1, characterised in that a methanol concentration of 3 to 20 % by weight is maintained.

3. A process as claimed in Claim 1, characterised in that a methanol concentration of 3 to 8 % by weight is maintained.

## Revendications

1. Procédé pour séparer d'une manière sélective des composés du soufre notamment l'hydrogène sulfuré et l'oxysulfure de carbone de mélanges de gaz himides par lavage avec des aromatiques additionnés de méthanol comme liquide de lavage à des températures en-dessous de 0 °C, le mélange de gaz humide étant, avant refroidissement, porté à la température de lavage par contact avec du méthanol liquide et le liquide de lavage étant soumis, après absorption des composés soufrés, à une régénération par la chaleur et ensuite recyclé dans le lavage, caractérisé en ce que, comme liquide de lavage, on utilise du toluène ou comme connu du xylène et que, dans le liquide de lavage à ramener de la régénération à la chaleur pour le lavage on maintient une concentration en méthanol de 3 à 30 % en poids.

2. Procédé suivant la revendication 1, caractérisé en ce que l'on maintient une concentration en méthanol de 3 à 30 % en poids.

3. Procédé suivant la revendication 1, caractérisé en ce que l'on maintient une concentration en méthanol de 3 à 8 % en poids.

0 023 550